# EUROPEAN PATENT SPECIFICATION

(11) **EP 4 053 435 B1**
(45) Date of publication and mention of the grant of the patent: **17.04.2024**
(21) Application number: 22158970.8
(22) Date of filing: 25.02.2022
(51) Int. Cl.: F16H 61/435

(54) **CONTROL METHOD FOR A HYDRAULIC TRANSMISSION OF AN AGRICULTURAL VEHICLE OR EARTH-MOVING MACHINE AND AGRICULTURAL VEHICLE OR EARTH-MOVING MACHINE IMPLEMENTING THE METHOD**
STEUERUNGSVERFAHREN FÜR EIN HYDRAULISCHES GETRIEBE EINES LANDWIRTSCHAFTLICHEN FAHRZEUGS ODER EINER ERDBEWEGUNGSMASCHINE UND LANDWIRTSCHAFTLICHES FAHRZEUG ODER ERDBEWEGUNGSMASCHINE ZUR DURCHFÜHRUNG DES VERFAHRENS
PROCÉDÉ DE COMMANDE D'UNE TRANSMISSION HYDRAULIQUE D'UN VÉHICULE AGRICOLE OU D'UN ENGIN DE TERRASSEMENT ET VÉHICULE AGRICOLE OU ENGIN DE TERRASSEMENT METTANT EN OEUVRE LE PROCÉDÉ

(30) Priority: 01.03.2021 IT 202100004760
(43) Date of publication of application: 07.09.2022
(73) Proprietor: CNH Industrial Italia S.p.A., 10156 Torino (IT)
(72) Inventor: Garramone, Adriano, 73100 Lecce (IT); Gravili, Andrea, 73100 Lecce (IT); Liberti, Stefano, 73100 Lecce (IT)
(74) Representative: CNH Industrial IP Department

(56) References cited:
- EP-A2- 1 382 891
- US-A- 5 390 759
- US-A- 6 010 309
- US-A1- 2007 193 263

## Description

### Field of the invention

The present invention relates to the field of hydraulic transmissions and in particular to the field of those transmissions implementing two operating modes: a first mode in which the hydraulic motor is forced to the maximum displacement to perform operations at very low speed and a second operating mode in which the displacement of the hydraulic motor varies according to the perceived load to perform operations at higher speed.

### State of the art

In agricultural and earth-moving machinery, the transmission to transfer motion from a prime mover to the wheels is of the hydraulic type. Very often, the transmission defines a series configuration, in which the prime mover drives a variable displacement hydraulic pump, which, in turn, drives a hydraulic motor which can have either fixed or variable displacement. Obviously, there are no further mechanical parts that contribute to the rotation of the wheel except the hydraulic motor.

The pump and the hydraulic motor are interconnected in a per se known manner by means of a so-called hydraulic forward line and a hydraulic return line.

Between the hydraulic motor and the wheels there is often, but not always, a discrete gearbox. Very often the ratios are just two, to facilitate the autonomous movement of the vehicle from one workplace to another workplace.

Regardless of the presence of a discreet gearbox, agricultural machines are often used to perform operations at very low speeds, that is to say for speeds below 1 - 2 km/h.

For an agricultural vehicle, a typical operation that requires such speed is sowing, in which a device connected to the vehicle inserts at least one seed into the ground precisely and with predetermined distances between one seed and another.

For an earthmoving machine, a typical operation that requires such speed is the impact-free approach to a truck to unload the material from the tool.

Under these operating conditions, the variable displacement hydraulic motor is forced to the maximum displacement so as to express a high transmission ratio, resulting in low speed and high torque.

Therefore, an operating mode often called "Turtle" is identified, because the vehicle can move very slowly but with high torque, and a second operating mode is called "Rabbit".

Switching between one mode and the other is generally operated by means of a button or other man/machine interface device present in the vehicle cabin.

When the transmission operates in Rabbit mode, the displacement of the hydraulic motor depends solely on the load perceived by the wheel. Thus, the displacement of the hydraulic motor is inversely proportional to the speed of the vehicle.

Although there are hydraulic motors whose displacement can be electrically controlled in an approximately continuous way as shown in US5390759A, most of the hydraulic motors for earth moving machines and agricultural vehicles provide the possibility to force the motor only to maximum displacement. For convenience, such hydraulic motors are defined as ON/OFF motors, meaning that it is not possible to force the displacement to intermediate values.

Generally, the speed of rotation of the prime mover is directly proportional to the position of the accelerator lever and the displacement of the pump is directly proportional to the rotational speed of the prime mover. Consequently, the speed of the vehicle and the speed of rotation of the prime mover are approximately directly proportional to each other. This operating mode is for convenience defined as "accelerator-base", since the rotation speed of the prime mover is approximately directly proportional to the position of the accelerator lever and the vehicle speed depends at least on the rotational speed of the prime mover, as there is a about linear relationship between the speed of rotation of the prime mover and the signal that controls the displacement of the hydraulic pump. The term "about" means that the control is in open loop, therefore an increase in the slope, i.e. the load, intervenes on the hydraulic motor and also on the hydraulic pump, the first increasing the displacement and the second reducing the displacement.

Therefore, the displacement of the hydraulic pump is generally controlled proportionally to the rotational speed of the prime mover according to a fixed, linear standard characteristic.

This command curve of the hydraulic pump displacement is called "static" as it does not depend on time, but only on the rotational speed of the prime mover.

When the transmission is set in Rabbit mode, this has a significant hysteresis in the sense that the position of the accelerator lever such as to cause the vehicle to start is different from the position of the lever in which the vehicle stops.

In particular, the starting condition (START) occurs at a rotation speed of the prime mover higher than the stop condition (STOP).

This means that the value of the current signal that controls the displacement of the hydraulic pump is different at START than at STOP. And, in particular, the value relating to the STOP is lower than the value relating to the START. Therefore, when the driver has to perform operations in confined spaces it is important to have a good control of the vehicle to avoid hitting surrounding objects and this hysteresis becomes a problem, to the point that often the driver is forced to switch to Turtle mode to have full control of vehicle mobility. However, this involves continuous switching that the driver has to perform manually with obvious discomfort for the driver.

### Summary of the invention

The purpose of the present invention is to indicate a method that makes the use of an agricultural vehicle or earth-moving machine simpler and more convenient in consideration of the operating conditions described above.

The basic idea of the present invention is to modify the control curve of the displacement of the hydraulic pump as a function of the rotation speed of the prime mover, in order to approximate the STOP and START conditions of the vehicle. In other words, a discontinuity is introduced in the pump displacement command signal with a sudden increase in the slope between the value of the control signal in the STOP condition and the START condition of the vehicle. In the interval between the minimum rotation speed (idle) and the STOP condition and between the START condition and the maximum rotation speed of the prime mover, the pump displacement control curve essentially remains the standard characteristic or parallel to it, with a slope significantly lower than the interval delimited by the STOP and START conditions.

Also the hydraulic motor has a variable displacement, wherein the displacement of the hydraulic motor is, at least in a first predetermined operating condition (Rabbit), variable and a function exclusively of a load applied to the wheel. The hydraulic motor can be forced to the maximum displacement to determine a second operating condition (Turtle) and preferably, the aforementioned strategy is applied only when the displacement of the hydraulic motor is a function exclusively of the load applied to the wheel. When the driver wants to move the vehicle by keeping the prime mover in an interval that includes the interval between STOP and START, unwanted jerks may occur.

According to a preferred variant of the invention, the entire range of positions of an accelerator lever is divided into two ranges so that a first range lays from zero to a predetermined intermediate position and the second range lays from the predetermined intermediate position to the position maximum.

Therefore, during vehicle acceleration, the increase over time of the pump displacement command signal is
- in the first range of accelerator lever positions:
   - *high* in the interval between the minimum signal and the signal corresponding to the STOP condition of the vehicle, then it is
   - *low* in the interval between the signal corresponding to the STOP condition of the vehicle and the signal corresponding to the START condition of the vehicle, then it is
   - *medium* in the interval between the signal corresponding to the START condition of the vehicle and the maximum signal,
      while it is
   - high when the position of the accelerator lever belongs to the second range of positions.

During a vehicle deceleration operation, an approximately reverse strategy is followed, in the sense that the decrease over time of the pump displacement command signal is
- high when the pedal position belongs to the second range of positions,
   and when the lever is in the first position range it is:
   - *medium* in the interval between the signal corresponding to the vehicle's START condition and the maximum signal, then it is
   - *very high* in the interval between the signal corresponding to the STOP condition of the vehicle and the signal corresponding to the START condition of the vehicle, then it is
   - *high* in the interval between the minimum signal and the signal corresponding to the vehicle's STOP condition.

The terms "very high", "high", "medium" and "low" are relative to each other. For example, *low* can mean that the variation of the hydraulic pump control signal is less than 40% of the maximum possible variation, medium can mean that the variation is about 60% of the maximum possible variation, *high* can mean that the signal variation control of the hydraulic pump is about 80% of the maximum possible variation and *very high* can mean that the variation is maximum.

Thanks to the present solution, it is possible to operate in a precise manner even at low speed without necessarily having to switch to Turtle mode, with an end ly precise response of the transmission with respect to the position of the accelerator pedal.

The dependent claims describe preferred variants of the invention, forming an integral part of this description.

### Brief description of the figures

Further objects and advantages of the present invention will become clear from the following detailed description of an example of its embodiment (and its variants) and from the annexed drawings given purely for explanatory and nonlimiting purposes, in which:

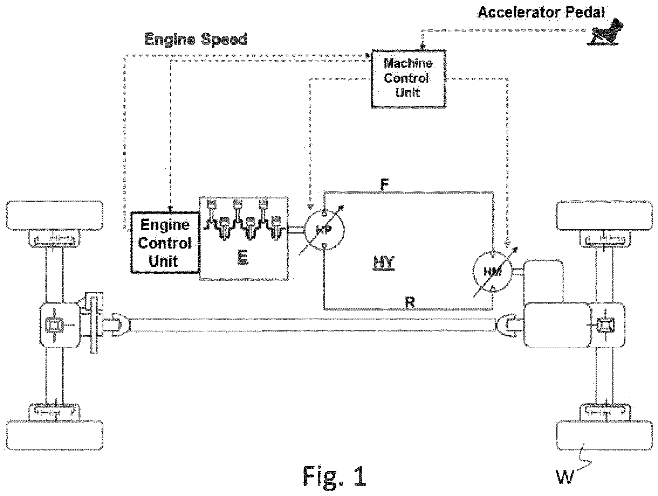

Figure 1 shows an example of hydraulic transmission in series configuration with in evidence processing means configured to supervise and control the hydraulic transmission according to the method object of the present invention;

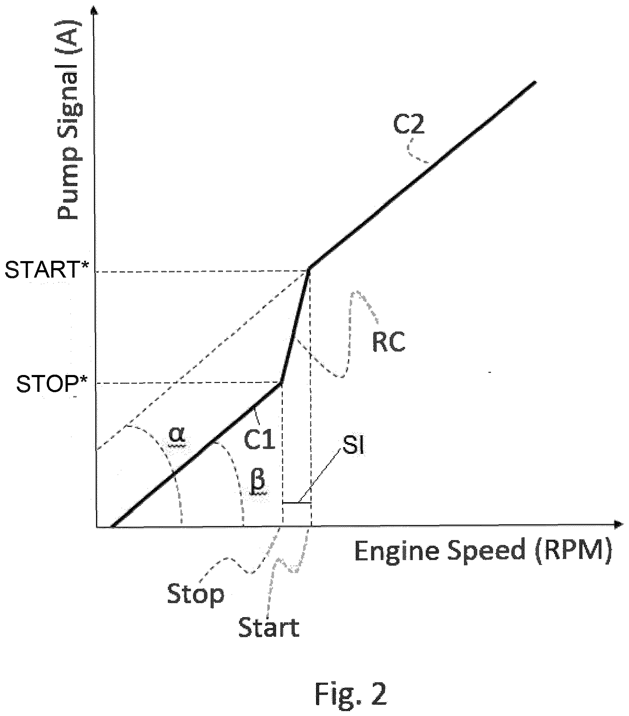

Figure 2 shows a diagram of the speed of rotation of the prime mover/command signal of the displacement of the hydraulic pump, defining a control curve manipulated in order to reduce or reset the hysteresis relating to the actual starting and stopping of the vehicle in relation to the hydraulic pump displacement control signal;

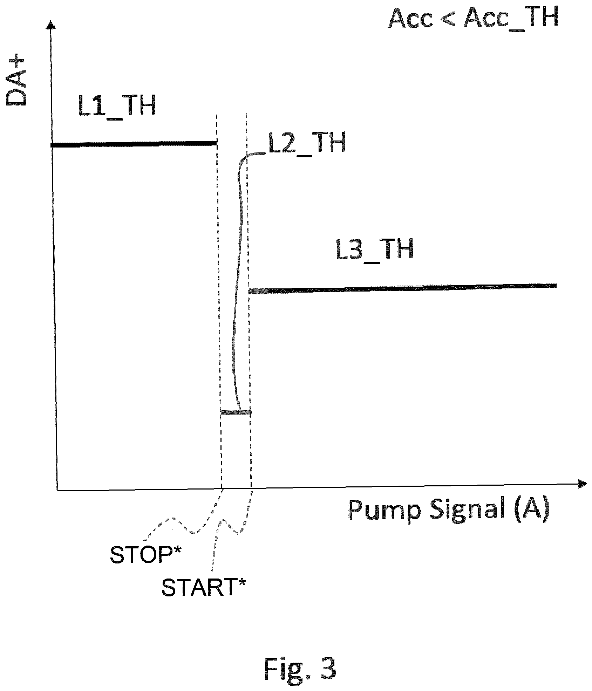

Figure 3 shows a diagram indicating the value of the increase over time of the command signal of the displacement of the hydraulic pump as a function of the command signal of the displacement of the pump, when, during the acceleration phase of the vehicle, the position of the accelerator it is below a first predetermined threshold;

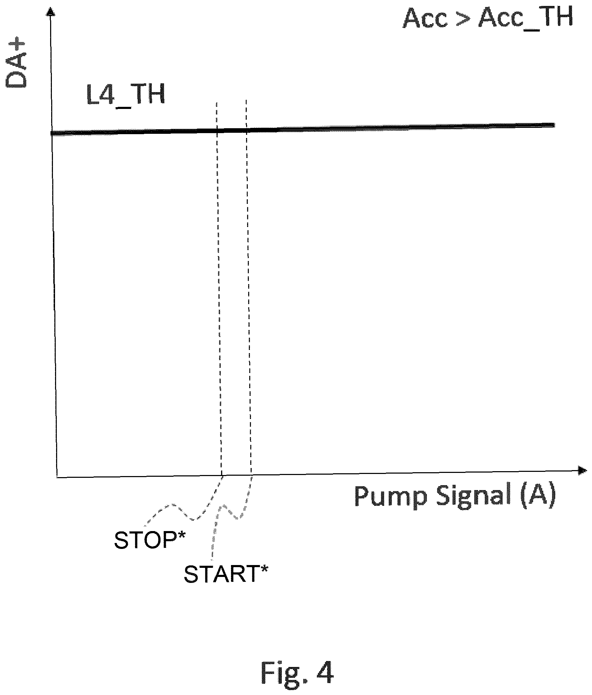

Figure 4 shows a diagram with the value of the increase over time of the command signal of the displacement of the hydraulic pump as a function of the command signal of the displacement of the pump, when, during the acceleration phase of the vehicle, the position of the accelerator it is above the first predetermined threshold indicated in Figure 3;

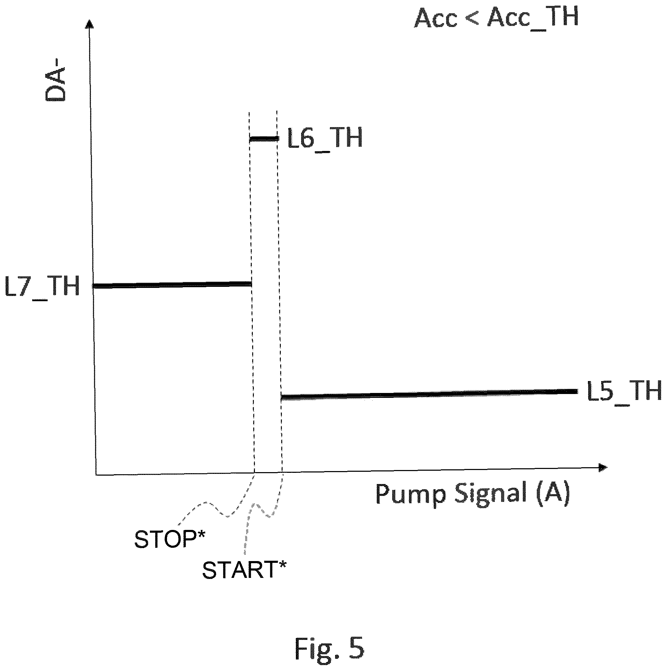

Figure 5 shows a diagram with the value of the decrease over time of the command signal of the displacement of the hydraulic pump as a function of the command signal of the displacement of the pump, when, during the deceleration phase, the position of the accelerator is below below the first predetermined threshold indicated in Figure 3;

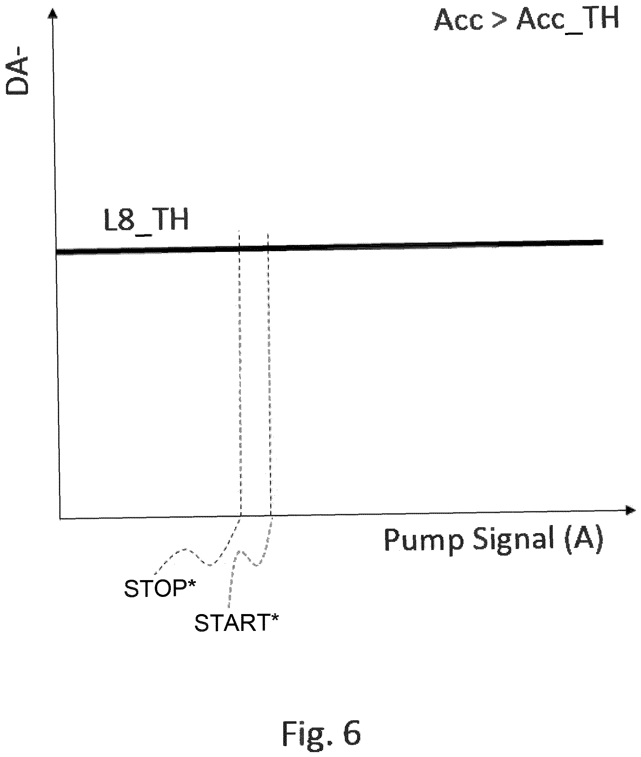

Figure 6 shows a diagram with the value of the decrease in time of the command signal of the displacement of the hydraulic pump as a function of the command signal of the displacement of the pump, when, during the deceleration phase of the vehicle, the position of the accelerator is above the first predetermined threshold indicated in figure 3.

The same reference numbers and letters in the figures identify the same elements or components or functions.

It should also be noted that the terms "first", "second", "third", "upper", "lower" and the like can be used here to distinguish various elements. These terms do not imply a spatial, sequential or hierarchical order for the modified elements unless specifically indicated or inferred from the text.

### Detailed description of exemplary embodiments

Figure 1 shows a propulsion system and in particular a hydraulic transmission of an agricultural vehicle or an earth-moving machine of the series type, in which a vehicular wheel W is driven in rotation by a hydraulic motor HM of a hydrostat HY which comprises a HP hydraulic pump connected to the hydraulic motor by means of a forward line F and a return line R.

Generally, when a selector selects forward gear, a valve controls the hydraulic pump so that it pressurizes the forward line, while when the selector selects reverse, the same valve or another valve controls the hydraulic pump so that it pressurizes the return line.

The hydraulic motor is of the variable displacement type, in which the displacement is variable and a function of a load applied to the wheel according to a first operating mode, generally defined Rabbit, since, in this operating mode, the vehicle can reach a relative maximum speed.

The hydraulic motor can be forced to the maximum displacement by activating a command signal, according to a second operating mode, generally called Turtle, in which the vehicle moves slowly but with the maximum available torque. The hydraulic motor may not otherwise be controllable to assume displacements different from the maximum one. In fact, when the control signal is deactivated, the displacement of the hydraulic motor depends exclusively on the resistant torque at the wheel W.

This method finds application, especially in those transmissions in which it is not possible to alter the displacement of the hydraulic motor except by bringing it to the relative maximum displacement.

The method object of the present invention provides for piloting the displacement of the hydraulic pump of the transmission by means of a control signal "Pump Signal (A)" which is a function of the rotation speed "Engine Speed (RPM)" of the prime mover E arranged to drive in rotation of the hydraulic pump HP, in which the function is manipulated in such a way as to comprise a first linear trend C1 and a second trend C2, connected by means of an intermediate joining curve RC defined in an interval of rotation speed SI of the prime mover having
- a lower end corresponding to the vehicle STOP from a dynamic condition and
- an upper end corresponding to the start START of the vehicle from a static condition,
and in which the intermediate joining curve identifies an increase in the displacement of the hydraulic pump with a gradient greater than the first and second linear trends.

The maximum slope of the joining curve depends on the dynamics of the hydraulic pump and on the characteristics of the transmission in general.

From a theoretical point of view, this intermediate joining curve can be vertical representing a discontinuity point. Obviously, this is not possible and therefore it is defined in the non-degenerate SI interval, but which in any case is desired to be as small as possible.

With reference to Figure 2, the first C1 and the second linear trend C2 have the same slope and in which said second linear trend presents an intersection with the ordinate axis, namely a "second known term", a value strictly greater than an intersection with the ordinate axis of the first linear trend C1, namely "a first known term".

Preferably, at least the first linear trend C1 belongs to the fixed, linear standard characteristic.

According to a preferred variant of the invention, in addition to the modification of the control curve of the hydraulic pump, a procedure for limiting the jerks that can occur when the rotation speed of the prime mover is in the aforementioned SI range delimited by STOP and START is proposed.

Therefore, it is expected to limit the variation over time of the command signal of the displacement of the hydraulic pump as a function of the signal **A** for the command of the displacement of the pump and a position Acc of the accelerator lever.

It must be clear that the STOP and START points refer to the dynamic-static and static-dynamic transitions of the vehicle, which correspond to predetermined values of the STOP* and START* signals for controlling the displacement of the hydraulic pump, as shown in figure 2.

For convenience, the diagrams of Figures 3 and 4 show the increase in time DA+ of the command signal of the displacement of the hydraulic pump and the diagrams of Figures 5 and 6 show the decrease in time DA- of the command signal of the displacement of the hydraulic pump in depending on the position of the accelerator lever: ACC<ACC_TH in figures 3 and 5 or ACC>ACC_TH in figures 4 and 6.

More specifically, during vehicle acceleration, which corresponds, with a certain delay, to the increase in the hydraulic pump command signal:
- when the accelerator pedal lever is below a predetermined Acc_TH accelerator threshold, it is expected that the increase over time of the pump displacement command signal is equal to:
   - **L1_TH** in the range of the hydraulic pump control signal between the minimum value and the STOP* value,
   - **L2_TH** in the range of the hydraulic pump control signal between the STOP* value and the START* value,
   - **L3_TH** in the range of the hydraulic pump control signal between the START* value and its maximum value, with **L1_TH> L3_TH> L2_TH,**

   - when the position of the accelerator pedal lever exceeds the predetermined threshold Acc_TH of the accelerator, then the increase over time of the command signal of the displacement of the hydraulic pump is equal to **L4_TH> = L1_TH.**

During a deceleration of the vehicle, which corresponds, with a certain delay, to the decrease of the command signal of the hydraulic pump:
- when the position of the accelerator pedal lever is below the predetermined accelerator threshold Acc_TH, it is expected that the decrease over time of the pump displacement control signal is equal to:
   - **L5_TH** in the range of the hydraulic pump control signal between the START* value and its maximum value,
   - **L6_TH** in the range of the hydraulic pump control signal between the STOP* value and the START* value,
   - **L7_TH** in the range of the hydraulic pump control signal between the minimum value and the STOP* value,
      with **L6_TH> L7_TH> L5_TH,**
- when the accelerator pedal lever exceeds the predetermined accelerator threshold Acc_TH, then the decrease over time of the hydraulic pump displacement command signal is equal to **L8_TH> = L7_TH.**

According to a preferred variant of the invention, when the operating mode changes from Rabbit to Turtle, it is expected to make the hydraulic pump displacement control curve entirely linear, according to the standard characteristic, so that:
- during vehicle acceleration an increase over time of the pump displacement command signal equal to **L4_TH** and
- during the deceleration of the vehicle a decrease in the time of the command signal of the pump displacement equal to **L8_TH.**

Generally, the setting of the Turtle operating mode, which forces the hydraulic motor to the maximum possible displacement, is achieved by means of man/machine interface, such as a physical or virtual button. However, this mode can also be activated automatically upon the occurrence of predetermined operating conditions.

The present invention can be advantageously implemented by means of a computer program which comprises coding means for carrying out the steps of the method, when this program is executed on a computer. Therefore, it is intended that the scope of protection extends to said computer program and further to computer readable means comprising a recorded message, said computer readable means comprising program coding means for carrying the steps of the method, when said program is run on a computer.

From the above description, the person skilled in the art is able to realize the object of the invention without introducing further construction details.

## Claims

1. Method for controlling a hydraulic transmission of an agricultural vehicle or of an earth-moving machine, in which the hydraulic transmission is of the series type, wherein a vehicle wheel (W) is connected to a hydraulic motor (HM) wherein a hydraulic pump (HP) with variable displacement is arranged to power said hydraulic motor, wherein the displacement of the hydraulic pump is arranged to be controlled as a function of a rotation speed of a prime mover (E) connected to the hydraulic pump, the method being **characterized in that** said function is manipulated in such a way as to include a first linear trend (C1) and a second linear trend (C2), connected by means of an intermediate curve (RC), defined in an interval of rotation speed (SI) of the prime mover having
- a lower end corresponding to the stop (STOP) of the vehicle from a dynamic condition and
- an upper end corresponding to the start (START) of the vehicle from a static condition,
and wherein said joining curve identifies an increase in the displacement of the hydraulic pump with a slope greater than the first and second linear trends.

2. Method according to claim 1, wherein said joining curve identifies a relatively sudden increase in the displacement of the hydraulic pump such as to make the speed range (SI) as small as possible.

3. Method according to any one of the preceding claims, wherein said first and second linear trends have the same slope and wherein said second linear trend has an intersection with the ordinate axis of a strictly greater value than an intersection with the axis of the ordinates of the first linear trend.

4. Method according to any one of the preceding claims, wherein said lower (STOP) and upper (START) end s of said speed interval (SI) of rotation of the first motor, identify corresponding second lower (STOP*) and upper (START*) in a domain wherein the control signal of the hydraulic pump is defined, said second ends identifying three contiguous intervals of said domain, and wherein the method comprises a procedure for limiting a variation of the control signal of the hydraulic pump in the time as a function of the interval to which the control signal belongs and as a function of a position of an accelerator lever.

5. The method according to claim 4, wherein when the accelerator pedal lever is below a predetermined accelerator threshold (Acc_TH) (ACC <ACC_TH), then
- during an acceleration of the vehicle, it is expected that the increase over time of the command signal of the pump displacement is equal to a first value (L1_TH) in the interval between the minimum signal and the second lower end (STOP*), is equal to a second value (L2_TH) in the interval between said second lower end and said second upper end (START*) and is equal to a third value (L3_TH) in the interval between said second upper end and the signal maximum, with the first value greater than the third value being greater than the second value (L1_TH)>(L3_TH)>(L2_TH) and wherein
- during a deceleration of the vehicle, it is expected that the decrease over time of the command signal of the pump displacement is equal to a fifth value (L5_TH) in the interval between the maximum signal and the second upper end (START*), is equal to a sixth value (L6_TH) in the interval between the second upper end (START*) and the second lower end (STOP*), it is equal to a seventh value (L7_TH) in the interval between the second lower end (STOP*) and the minimum signal, with the sixth value greater than the seventh being greater than the fifth (L6_TH> L7_TH> L5_TH.

6. Method according to any one of the preceding claims 4 or 5, including the fact that when the accelerator pedal lever exceeds the predetermined accelerator threshold (Acc_TH), then during an acceleration of the vehicle it is expected that the increase over time of the accelerator control signal of the hydraulic pump displacement is equal to a fourth value (L4_TH) greater than or equal to said first value (L1_TH) and wherein during a deceleration of the vehicle, the decrease in time of the command signal of the displacement of the hydraulic pump is equal to an eighth value (L8_TH) greater than or equal to said seventh value (L7_TH).

7. Method according to any one of the preceding claims, comprising a step, when a signal is active which forces said hydraulic motor to a relative maximum displacement, of making the control curve of the displacement of the hydraulic pump entirely linear and of applying during acceleration of the vehicle an increase in the time of the control signal of the pump displacement equal to said fourth value (L4_TH) and during the deceleration of the vehicle a decrease in the time of the control signal of the pump displacement equal to said eighth value (L8_TH).

8. A computer program comprising program coding means adapted to carry out all the steps of any one of claims 1 to 7, when said program is run on a computer.

9. Computer readable means comprising a recorded program, said computer readable means comprising program coding means adapted to perform all steps of any one of claims 1 to 7, when said program is run on a computer.

10. Agricultural vehicle or earth-moving machine comprising a series-type hydraulic transmission, wherein a vehicle wheel (W) is connected to a hydraulic motor (HM) and wherein a variable displacement hydraulic pump (HP) is arranged to feed said hydraulic motor, wherein the displacement of the hydraulic pump is arranged to be controlled as a function of a rotation speed of a prime mover (E) connected to the hydraulic pump, the vehicle or machine being
**characterized in that** said function comprises a first linear trend and a second linear course, connected by means of a connecting curve, defined in an interval of rotation speed (SI) of the prime mover having
- a lower end corresponding to the stop (STOP) of the vehicle from a dynamic condition and
- an upper end corresponding to the start (START) of the vehicle from a static condition,
and wherein said joining curve identifies an increase in the displacement of the hydraulic pump with a gradient greater than the first and second linear trends.

## Patentansprüche

1. Verfahren zum Steuern eines Hydraulikgetriebes eines landwirtschaftlichen Fahrzeugs oder einer Erdbewegungsmaschine, bei der das Hydraulikgetriebe vom Reihenschaltungs-Typ ist, wobei ein Fahrzeugrad (W) mit einem Hydraulikmotor (HM) verbunden ist, wobei eine Hydraulikpumpe (HP) mit variabler Verstellung angeordnet ist, um den Hydraulikmotor anzutreiben, wobei die Verstellung der Hydraulikpumpe derart angeordnet wird, dass sie als Funktion einer Drehgeschwindigkeit einer primären Bewegungseinrichtung (E) gesteuert wird, die mit der Hydraulikpumpe verbunden ist,
wobei das Verfahren **dadurch gekennzeichnet ist, dass**
die Funktion derart manipuliert wird, dass sie einen ersten linearen Verlauf (C1) und einen zweiten linearen Verlauf (C2) aufweist, die mittels einer Zwischenkurve (RC) verbunden sind, definiert in einem Intervall der Drehzahl (SI) der primären Bewegungseinrichtung, das aufweist:
- ein unteres Ende, das dem Abstoppen (STOP) des Fahrzeugs aus einem dynamischen Zustand entspricht, und
- ein oberes Ende, das dem Start (START) des Fahrzeugs aus einem statischen Zustand entspricht,
und wobei die Verbindungskurve eine Zunahme der Verstellung der Hydraulikpumpe mit einer Steigung aufzeigt, die größer ist als der erste und der zweite lineare Verlauf.

2. Verfahren nach Anspruch 1, wobei die Verbindungskurve eine relativ plötzliche Zunahme der Verstellung der Hydraulikpumpe aufzeigt, um das Geschwindigkeitsintervall (SI) so klein wie möglich zu machen.

3. Verfahren nach einem der vorhergehenden Ansprüche, wobei der erste und der zweite lineare Verlauf die gleiche Steigung aufweisen und wobei der zweite lineare Verlauf einen Schnittpunkt mit der Ordinatenachse aufweist, der einen deutlich größeren Wert aufweist als ein Schnittpunkt des ersten linearen Verlaufs mit der Ordinatenachse.

4. Verfahren nach einem der vorhergehenden Ansprüche, wobei das untere (STOP) und das obere (START) Ende des Geschwindigkeitsintervalls (SI) ein der Drehung des ersten Motors entsprechendes zweites unteres (STOP*) und oberes (START*) Ende in einer Domäne aufzeigen, in der das Steuersignal der Hydraulikpumpe definiert wird,
wobei die zweiten Enden drei zusammenhängende Intervalle der Domäne aufzeigen und wobei das Verfahren einen Vorgang zum Begrenzen einer zeitlichen Variation des Steuersignals der Hydraulikpumpe als eine Funktion des Intervalls, zu dem das Steuersignal gehört, und als eine Funktion einer Position eines Gaspedals umfasst.

5. Verfahren nach Anspruch 4, wobei, wenn das Gaspedal unterhalb eines vorbestimmten Beschleunigungsgrenzwerts (Acc_TH) liegt (ACC < ACC_TH), dann
- während einer Beschleunigung des Fahrzeugs erwartet wird, dass der Anstieg des Steuersignals der Pumpenverstellung über die Zeit gleich einem ersten Wert (L1_TH) im Intervall zwischen dem Minimalsignal und dem zweiten unteren Ende (STOP*), gleich einem zweiten Wert (L2_TH) im Intervall zwischen dem zweiten unteren Ende und dem zweiten oberen Ende (START*) und gleich einem dritten Wert (L3_TH) im Intervall zwischen dem zweiten oberen Ende und dem Maximalsignal ist,
wobei der erste Wert größer ist als der dritte Wert, der größer ist als der zweite Wert (L1_TH) > (L3_TH) > (L2_TH),
und wobei
- während eines Bremsvorgangs des Fahrzeugs erwartet wird, dass die Abnahme des Steuersignals der Pumpenverstellung über die Zeit gleich einem fünften Wert (L5_TH) im Intervall zwischen dem Maximalsignal und dem zweiten oberen Ende (START*), gleich einem sechsten Wert (L6_TH) im Intervall zwischen dem zweiten oberen Ende (START*) und dem zweiten unteren Ende (STOP*), gleich einem siebten Wert (L7_TH) im Intervall zwischen dem zweiten unteren Ende (STOP*) und dem Minimalsignal ist,
wobei der sechste Werte größer ist als der siebte, der größer ist als der fünfte (L6_TH > L7_TH > L5_TH).

6. Verfahren nach einem der vorhergehenden Ansprüche 4 oder 5, umfassend die Tatsache, dass, wenn das Gaspedal den vorbestimmten Beschleunigungsgrenzwert (Acc_TH) überschreitet, dann während einer Beschleunigung des Fahrzeugs erwartet wird, dass der Anstieg des Beschleunigungssteuersignals der Verstellung der Hydraulikpumpe über die Zeit einem vierten Wert (L4_TH) entspricht, der größer oder gleich dem ersten Wert (L1_TH) ist, und wobei während eines Bremsvorgangs des Fahrzeugs die Abnahme des Steuersignals der Verstellung der Hydraulikpumpe über die Zeit einem achten Wert (L8_TH) entspricht, der größer oder gleich dem siebten Wert (L7_TH) ist.

7. Verfahren nach einem der vorhergehenden Ansprüche, das dann, wenn ein Signal aktiv ist, das den Hydraulikmotor auf eine relative Maximalverstellung zwingt, einen Schritt umfasst, bei dem die Steuerungskurve der Verstellung der Hydraulikpumpe vollständig linear gemacht wird, und bei dem während der Beschleunigung des Fahrzeugs eine Zunahme des Steuersignals der Pumpenverstellung über die Zeit entsprechend dem vierten Wert (L4_TH) erfolgt, und während eines Bremsvorgangs des Fahrzeugs eine Abnahme des Steuersignals der Pumpenverdrängung entsprechend dem achten Wert (L8_TH) erfolgt.

8. Computerprogramm, das Programm-Codierungsmittel aufweist, die dazu eingerichtet sind, alle Schritte nach einem der Ansprüche 1 bis 7 auszuführen, wenn das Programm auf einem Computer ausgeführt wird.

9. Computerlesbares Mittel mit einem aufgezeichneten Programm, wobei das computerlesbare Mittel Programm-Codierungsmittel aufweist, die dazu eingerichtet sind, alle Schritte nach einem der Ansprüche 1 bis 7 auszuführen, wenn das Programm auf einem Computer ausgeführt wird.

10. Landwirtschaftliches Fahrzeug oder Erdbewegungsmaschine mit einem Hydraulikgetriebe des Reihenschaltungs-Typs, wobei ein Fahrzeugrad (W) mit einem Hydraulikmotor (HM) verbunden ist und wobei eine Hydraulikpumpe mit variabler Verstellung (HP) angeordnet ist, um den Hydraulikmotor zu speisen, wobei die Verstellung der Hydraulikpumpe derart angeordnet ist, dass sie als Funktion einer Geschwindigkeit einer primären Bewegungseinrichtung (E) gesteuert wird, die mit der Hydraulikpumpe verbunden ist,
wobei das Fahrzeug oder die Maschine **dadurch gekennzeichnet ist, dass**
die Funktion einen ersten linearen Verlauf und einen zweiten linearen Verlauf aufweist, die durch eine Verbindungskurve verbunden sind, definiert in einem Intervall der Drehgeschwindigkeit (SI) der primären Bewegungseinrichtung, das umfasst
- ein unteres Ende, das dem Abstoppen (STOP) des Fahrzeugs aus einem dynamischen Zustand entspricht, und
- ein oberes Ende, das dem Start (START) des Fahrzeugs aus einem statischen Zustand entspricht,
und wobei die Verbindungskurve eine Zunahme der Verstellung der Hydraulikpumpe mit einer Steigung aufzeigt, die größer ist als der erste und der zweite lineare Verlauf.

## Revendications

1. Procédé de commande d'une transmission hydraulique d'un véhicule agricole ou d'un engin de terrassement, dans lequel la transmission hydraulique est du type série, dans lequel une roue (W) du véhicule est raccordée à un moteur hydraulique (HM) dans lequel une pompe hydraulique (HP) à cylindrée variable est agencée pour alimenter ledit moteur hydraulique, dans lequel la cylindrée de la pompe hydraulique est agencée pour être commandée comme une fonction d'une vitesse de rotation d'un moteur primaire (E) raccordé à la pompe hydraulique, le procédé étant **caractérisé en ce que** ladite fonction est manipulée de manière à inclure une première tendance linéaire (CI) et une seconde tendance linéaire (C2), raccordées au moyen d'une courbe intermédiaire (RC), définie dans un intervalle de vitesse de rotation (SI) du moteur primaire ayant
- une extrémité inférieure correspondant à l'arrêt (STOP) du véhicule à partir d'une condition dynamique et
- une extrémité supérieure correspondant au démarrage (START) du véhicule à partir d'une condition statique,
et dans lequel ladite courbe de jonction identifie une augmentation de la cylindrée de la pompe hydraulique avec une pente supérieure aux première et seconde tendances linéaires.

2. Procédé selon la revendication 1, dans lequel ladite courbe de jonction identifie une augmentation relativement soudaine de la cylindrée de la pompe hydraulique de manière à rendre la plage de vitesse (SI) la plus petite possible.

3. Procédé selon l'une quelconque des revendications précédentes, dans lequel lesdites première et seconde tendances linéaires ont la même pente et dans lequel ladite seconde tendance linéaire présente une intersection avec l'axe des ordonnées d'une valeur strictement supérieure à une intersection avec l'axe des ordonnées de la première tendance linéaire.

4. Procédé selon l'une quelconque des revendications précédentes, dans lequel lesdites extrémités inférieure (STOP) et supérieure (START) dudit intervalle de vitesse (SI) de rotation du premier moteur identifient les secondes extrémités inférieure (STOP*) et supérieure (START*) correspondantes dans un domaine dans lequel le signal de commande de la pompe hydraulique est défini, lesdites secondes extrémités identifiant trois intervalles contigus dudit domaine, et dans lequel le procédé comprend une procédure pour limiter une variation du signal de commande de la pompe hydraulique dans le temps en tant que fonction de l'intervalle auquel appartient le signal de commande et en tant que fonction d'une position d'un levier d'accélération.

5. Le procédé selon la revendication 4, dans lequel lorsque le levier de la pédale d'accélération est inférieur à un seuil d'accélération prédéterminé (Acc_TH) (ACC <ACC_TH), alors
- lors d'une accélération du véhicule, il est prévu que l'augmentation dans le temps du signal de commande de la cylindrée de la pompe soit égale à une première valeur (LI_TH) dans l'intervalle entre le signal minimum et la seconde extrémité inférieure (STOP*), soit égale à une deuxième valeur (L2_TH) dans l'intervalle entre ladite seconde extrémité inférieure et ladite seconde extrémité supérieure (START*) et soit égale à une troisième valeur (L3_TH) dans l'intervalle entre ladite seconde extrémité supérieure et le maximum du signal, avec la première valeur supérieure à la troisième valeur elle-même supérieure à la deuxième valeur (LI_TH)>(L3_TH)>(L2_TH) et dans lequel
- lors d'une décélération du véhicule, il est prévu que la baisse dans le temps du signal de commande de la cylindrée de la pompe soit égale à une cinquième valeur (L5_TH) dans l'intervalle entre le signal maximum et la seconde extrémité supérieure (START*), soit égale à une sixième valeur (L6_TH) dans l'intervalle entre la seconde extrémité supérieure (START*) et la seconde extrémité inférieure (STOP*), soit égale à une septième valeur (L7_TH) dans l'intervalle entre la seconde extrémité inférieure (STOP*) et le signal minimum, avec la sixième valeur supérieure à la septième valeur elle-même supérieure à la cinquième valeur (L6_TH> L7_TH> L5_TH).

6. Procédé selon l'une quelconque des précédentes revendications 4 ou 5, incluant le fait que lorsque le levier de la pédale d'accélération excède le seuil d'accélération (Acc_TH) prédéterminé, alors pendant l'accélération du véhicule il est prévu que l'augmentation dans le temps du signal de commande de l'accélérateur de la cylindrée de la pompe hydraulique est égale à une quatrième valeur (L4_TH) supérieure ou égale à ladite première valeur (LI_TH) et dans lequel lors d'une décélération du véhicule, la baisse temporelle du signal de commande de la cylindrée de la pompe hydraulique est égale à une huitième valeur (LB TH) supérieure ou égale à ladite septième valeur (L7_TH)

7. Procédé selon l'une quelconque des revendications précédentes, comprenant une étape, lorsqu'un signal qui est actif force ledit moteur hydraulique à une cylindrée maximum relative, en rendant la courbe de commande de la cylindrée de la pompe hydraulique entièrement linéaire et en appliquant lors de l'accélération du véhicule une augmentation temporelle du signal de commande de la cylindrée de la pompe égale à ladite quatrième valeur (L4_TH) et lors de la décélération du véhicule une baisse temporelle du signal de commande de la cylindrée de la pompe égale à ladite huitième valeur (L8_TH)

8. Un programme informatique comportant des moyens pour coder un programme, adapté pour réaliser toutes les étapes de l'une quelconque des revendications 1 à 7, lorsque ledit programme est exécuté sur un ordinateur.

9. Moyens lisibles par ordinateur comprenant un programme enregistré, lesdits moyens lisibles par ordinateur comprenant des moyens de codage de programme adaptés pour effectuer toutes les étapes de l'une quelconque des revendications 1 à 7, lorsque ledit programme est exécuté sur un ordinateur.

10. Véhicule agricole ou engin de terrassement comprenant
une transmission hydraulique de type série, dans lequel une roue (W) du véhicule est raccordée à un moteur hydraulique (HM) et dans lequel une pompe hydraulique (HP) à cylindrée variable est agencée pour alimenter ledit moteur hydraulique, dans lequel la cylindrée de la pompe hydraulique est agencée pour être commandée comme une fonction d'une vitesse de rotation d'un moteur primaire (E) raccordé à la pompe hydraulique, le véhicule ou la machine étant caractérisé(e) en ce que ladite fonction comprend une première tendance linéaire et une seconde trajectoire linéaire, raccordées au moyen d'une courbe de raccordement, définie dans un intervalle de vitesse de rotation (SI) du moteur primaire ayant
- une extrémité inférieure correspondant à l'arrêt (STOP) du véhicule à partir d'une condition dynamique et
- une extrémité supérieure correspondant au démarrage (START) du véhicule à partir d'une condition statique,
et dans lequel ladite courbe de jonction identifie une augmentation de la cylindrée de la pompe hydraulique avec un gradient supérieur aux première et seconde tendances linéaires.
